# EUROPÄISCHE PATENTSCHRIFT

(11) **EP 0 486 040 B1**
(45) Veröffentlichungstag und Bekanntmachung des Hinweises auf die Patenterteilung: **02.08.1995**
(21) Anmeldenummer: 91119509.7
(22) Anmeldetag: 14.11.1991
(51) Int. Cl.: F16G 11/00

(54) **Seilkreuzungs-Verbindungselement**
Connecting device for crossing cables
Elément de liaisons pour croisement de câbles

(30) Priorität: 14.11.1990 DE 9015572 U
(43) Veröffentlichungstag der Anmeldung: 20.05.1992
(73) Patentinhaber: Huck, Manfred, D-35614 Asslar (DE)
(72) Erfinder: Huck, Manfred, D-35614 Asslar (DE)
(74) Vertreter: Müller, Eckhard, Dr.

(56) Entgegenhaltungen:
- DE-U- 8 801 165
- DE-U- 9 015 572
- GB-A- 631 864
- US-A- 3 704 488
- US-A- 4 511 279
- US-A- 4 771 516
- US-A- 4 955 750

## Beschreibung

Die Erfindung bezieht sich auf ein Seilkreuzungs-Verbindungselement, insbesondere für Netze, gemäß dem Oberbegriff des Anspruches 1.

Ein derartiges Verbindungselement ist aus der US-A-4 771 516 bekannt. Es besteht aus zwei identischen Hälften mit jeweils einer Aussparung, durch welche das jeweilige Seil hindurch geführt ist. Beide Hälften lassen sich zusammenpressen und sind mittels Rastverbindungen miteinander verbunden. Eine Axial- oder Drehbewegung der in einem rechten Winkel oder parallel zueinander geführten Seile soll durch die aus der Pressung der Kupplungshälften resultierende Reibungskraft oder durch zusätzliche Widerhaken am Boden der Ausnehmungen verhindert werden, während eine Trennung der beiden Kupplungsteile durch die Rastverbindungen oder durch zusätzliche Schrauben, beispielsweise Gewinde- oder Gewindeschneidschrauben, welche sich durch jede der Kupplungshälften und durch jedes Seil erstrecken, ausgeschlossen sein soll. Die beiden Kupplungshälften bestehen aus Kunststoffmaterial, wobei die Rast- und Gegenrastmittel an elastisch nachgebenden Abschnitten der Kupplungshälften gebildet sind. Um in Montagestellung ein unbeabsichtigtes Entrasten der beiden Kupplungshälften auszuschließen, ist eine genügend hohe Steifigkeit der die Rast- und Gegenrastmittel aufweisenden Abschnitte erforderlich. Dies hat zur Folge, daß sich die beiden Kupplungshälften praktisch nicht mehr von Hand, sondern nur durch Werkzeuge, bspw. durch Schlag mit einem Hammer, oder in einer Presse zusammenfügen lassen, was jedoch ein erheblicher Zeitaufwand darstellt. Darüber hinaus besitzt die bekannte Seilkupplung nur eine geringe Festigkeit. Durch die im Bereich der Rast- und Gegenrastmittel bedingte Materialschwächung der Kupplungshälften und durch die für den Zusammenhalt der Rastverbindung erforderliche Vorspannung der die Rast- und Gegenrastmittel tragenden Abschnitte der Kupplungshälften kann es nämlich bei Auftreffen eines Gegenstandes oder bei einem Schlag auf die Seilkupplung zu einer Beschädigung oder gar Zerbersten des Kupplungselementes kommen.

Desweiteren ist aus der US-A 3,704,488 eine Klemme für das Seilende von Bootstampen bekannt mit einem einstückigen Block, welcher zwei im Abstand voneinander angeordnete parallele Bohrungen aufweist, durch welche das Tampenende mit U-förmigen Verlauf geführt ist. Eine der Bohrungen ist mit einem Querloch versehen, in welchem ein Stift lösbar gehalten ist. Das Stiftloch erstreckt sich mit seinem Querschnitt nur teilweise in den Bereich der Seilbohrung, so daß durch den beim Einsetzen des Stiftes sich aufbauenden seitlichen Anpreßdruckes der entsprechende Seilabschnitt gegen die gegenüberliegende Innenwandung der Seilbohrung gedrückt wird. Eine ähnliche Seilbefestigung zur Bildung einer Seilschlaufe an einem Seilende mit einer Seilhülse und einer Kausche ist aus der GB-A-631 864 bekannt. Die Seilhülse weist drei parallele Längsbohrung auf, durch welche das Seilende unter Bildung einer Seilschlaufe geführt ist. In die Seilhülse sind senkrecht zu den Seilbohrungen drei in Längsrichtung hintereinander angeordnete Gewindebohrungen eingebracht, in welche Madenschrauben einschraubbar sind. Die Madenschrauben bewirken beim Eindrehen ein Anpressen der jeweiligen Seilabschnitte, indem jede Madenschraube mit ihrem Schaft an die beiden gegenüberliegenden Seilkanäle angrenzt und mit ihrer Spitze in den dritten Seilkanal hineinragt. Es hat sich jedoch gezeigt, daß derartige Seilbefestigungen, bei denen lediglich ein Andrücken der Seilabschnitte von einer Seite her gegen die gegenüberliegende Innenwandung einer Seilbohrung erfolgt, keine ausreichende Festigkeit besitzen, um sie bspw. bei Kletternetzen für Kinderspielplätze, Halte- oder Sicherungsnetzen zum Schutz vor herausfallendem oder losem Gestein im Straßenbau oder im Berg- und Tunnelbau einzusetzen.

Weiterhin ist aus der US-A-4 955 750 ein Befestigungselement für Seile bekannt mit einem aus elastischem, thermoplastischem Kunststoff bestehenden Elementenkörper. Der Elementenkörper weist wenigstens zwei sich in Längsrichtung und parallel zueinander erstreckende Durchgangskanäle für die Seile auf mit sich in Querrichtung erstreckenden Bohrungen für Befestigungsnägel. Diese Nägel werden quer zu den Durchgangskanälen durch die Seile hindurchgetrieben. Derartige Befestigungselemente aus elastischem Kunststoff sind jedoch für Seilkreuzungs-Verbindungselemente zur Anwendung von Seilnetzen nicht geeignet.

Davon ausgehend liegt der Erfindung die Aufgabe zugrunde, ein Seilkreuzungs-Verbindungselement der eingangs näher bezeichneten Art dahingehend weiterzuentwickeln, daß bei einfacher Herstellung und Montage eine sichere und zuverlässige Seilverbindung mit hoher Festigkeit und geringem Eigengewicht geschaffen ist.

Diese Aufgabe wird gelöst durch die Merkmale des Anspruches 1.

Das erfindungsgemäße Verbindungselement ermöglicht eine dauerhafte Verbindung von Seilen mit außerordentlich hoher Belastbarkeit, so daß das Verbindungselement zur Fixierung von Seilen in Kreuzungspunkten von Netzen mit extremer Belastung eingesetzt werden kann. Obgleich sich die Sicherungselemente mit ihrem die Gewindegänge aufweisenden Schaft in Querrichtung durch das Seil erstrecken, findet eine Materialbeschädigung oder Schwächung des Seiles nicht statt. Es hat sich nämlich gezeigt, daß sich beim Einbringen der Sicherungselemente die einzelnen Litzen des Seiles an den Gewindegängen anlegen und an den Sicherungselementen fixiert werden, ohne daß eine Beschädigung von Draht- oder Kunststofflitzen auftritt. Durch die in Querrichtung die Seile durchdringenden Sicherungselemente ergibt sich eine hohe Volumenverdrängung, wodurch ein allseitig wirkender Druck zum Anpressen des Seiles gegen die Innenwandungen des Durchgangskanals aufgebaut wird, was zu der außerordentlich hohen Festigkeit der Seilverbindung führt.

Da sich die Sicherungselemente mit ihren freien Enden in den jeweils anderen Durchgangskanal bzw. das andere Seil erstrecken, ergibt sich eine nochmalige Volumenverdrängung in den des jeweiligen Seilabschnitten. Dadurch wird das Seilmaterial mit noch höherer Kraft gegen die Innenwandung des Durchgangskanals gepreßt. Hierdurch trägt die Gesamtzahl der Sicherungelemente zur Festelgung jedes der Seile bei.

Die Anordnung der Sicherungselemente kann bspw. derart erfolgen, daß diese in den Durchgangskanälen in entgegengesetzter Richtung verlaufen, d. h. mit i. w. parallelen und mit etwas seitlichem Abstand zueinander verlaufenden Gewindeschäften. Bei dieser Anordnung verteilen sich die einzelnen Litzen des Seiles auf die Gewindeabschnitte der beiden in dem Durchgangskanal verlaufenden Sicherungselemente. Selbstverständlich ist es auch möglich, daß sich in dem jeweiligen Durchgangskanal die Sicherungselemente im rechten Winkel zueinander erstrecken.

Ein weiterer Vorteil ist, daß mit ein und demselben Verbindungselement Seile mit relativ großem Toleranzbereich in ihrem Durchmesser befestigt werden können. Auch gestaltet sich die Montage der Verbindungselemente einfach und schnell, indem die entsprechenden Seile durch die Durchgangskanäle geschoben und anschließend die Sicherungselemente eingebracht werden. Eine mechanische Beanspruchung des Verbindungselementes bereits bei der Montage, wie bspw. durch Hammerschlag oder Preßwerkzeuge entsprechend den bekannten Seilkupplungen, tritt nicht auf. Auch weist der erfindungsgemäße Elementenkörper keine verletzungsträchtigen Spalte o. dgl. auf, so daß sich das Verbindungselement in besonderer Weise auch für Kletternetze auf Kinderspielplätzen und dgl. empfiehlt.

In einer ersten besonderen Ausführungsform der Erfindung ist es vorgesehen, daß die Sicherungselemente den jeweils anderen Durchgangskanal bzw. das jeweils andere Seil durchsetzen. Hierdurch ist die Seilverdrängung in den einzelnen Durchgangskanälen nochmals erhöht. Vorallem erfolgt eine Dreifachsicherung der Sicherungselemente an dem Elementenkörper, nämlich in der Einschrauböffnung, der Wandung zwischen den beiden Durchgangskanälen und der der Einschraubbohrung gegenüberliegenden Wandung des Elementenkörpers.

Besonders vorteilhaft ist es, wenn gemäß einer Ausführungsform der Erfindung die Sicherungselemente ein selbstfurchendes Gewinde, wie bspw. ein Holzschraubengewinde, oder ein selbstschneidendes Gewinde aufweisen. Hierdurch ergibt sich eine einfache Montage der erfindungsgemäßen Verbindungselemente, indem nach Einführen der Seile durch die Durchgangskanäle des Elementkörpers die so ausgebildeten Sicherungselemente durch bereits vorgesehene Schraubenlöcher im Elementkörper geschraubt werden. Dabei schneiden die Gewindegänge des Schraubbolzens in den Elementkörper ein, wodurch die Sicherungselemente selbsthemmend in dem Elementkörper gehalten sind und eine außerordentlich hohe Dauerhaltbarkeit der Verbindung erreicht ist. Die Ausbildung der Sicherungselemente als selbstfurchendes oder selbstschneidendes Gewinde hat aber auch den Vorteil, daß sich die Litzen der Seile jeweils zwischen den Gewindegängen der Sicherungelemente anlegen, ohne daß es zu Beschädigungen des Seiles kommt. Das gleiche ergibt sich mitunter auch für die Einzeldrähte einer Seillitze ergeben.

Nach einer weiteren Ausführungsform der Erfindung weisen die Sicherungselemente bzw. am Schraubenkopf Mitnehmerflanken zum Ansetzen eines Klingenwerkzeuges o. dgl. auf, welche lediglich zur Übertragung eines Anziehmomentes ausgebildet sind. Ohne besondere Werkzeuge bzw. Maschinen ist ein Lösen der Sicherungselemente ausgeschlossen, so daß das erfindungsgemäße Verbindungselement bzw. ein durch die vorgeschlagenen Verbindungselemente aufgebautes Sicherungs- oder Haltenetz und ebenso ein für Kinderspielplätze vorgesehenes Kletternetz gegen mutwillige Zerstörung und Vandalismus geschützt ist.

Um von vorne herein eine Verletzungsgefahr an vorstehenden Teilen des Verbindungselementes auszuschließen, ist es nach der Erfindung auch vorgesehen, daß der Elementkörper mit Senkungen für die Sicherungselemente bzw. die Gewindeschrauben versehen ist.

Eine besonders hohe Belastbarkeit des erfindungsgemäßen Verbindungselementes ergibt sich nach einem weiteren Vorschlag der Erfindung dann, wenn der Elementkörper kugelförmig ausgebildet ist.

Die Durchgangskanäle können erfindungsgemäß rechtwinklig zueinander ausgerichtet sein. Selbstverständlich ist es auch möglich, daß die Durchgangskanäle jede beliebige Winkellage zueinander einnehmen.

Erfindungsgemäß können die Durchgangskanäle mit Widerhaken versehen sein. Diese Ausführungsform ist insbesondere für die Fixierung von Stahlseilen bestimmt. Aufgrund der relativ harten Oberfläche von Drahtseilen lassen diese sich ohne größere Probleme durch die mit den vorstehenden Widerhaken versehenen Durchgangskanäle schieben. Dabei sollten die Widerhaken in zwei gegenüberliegenden Längsreihen, bspw. bei Anordnung an einem Netz zur Netzober- und -unterseite hin, angeordnet sein, um eine nochmalige Verbesserung der Zug- bzw., im Falle des Netzes, der Druckbeanspruchung zu erreichen. Dabei können die Widerhaken jeder Längsreihe mit ihren Hakenenden bspw. gruppenweise gegeneinander gerichtet sein, was zu einer extremen Zugbelastbarkeit führt.

Nach einem weiteren Vorschlag der Erfindung kann der Elementkörper aus, ggf. glasfaserverstärktem, Polyamid, Polypropylen oder Polyäthylen bestehen und im Hinblick auf eine noch höhere Festigkeit aus, vorzugsweise kohlefaserverstärktem, Polyester oder einem Polyestergemisch. Bei einer plötzlichen Druckbeanspruchung des Verbindungselementes ergibt sich bei diesen Werkstoffen für den Elementkörper lediglich eine geringe Verformung, ohne daß es auch bei größeren Belastungen zu einem Zerbersten wie bei bekannten Seilkupplungen kommt. Zudem erhalten die Verbindungselemente oder damit aufgebaute Netze ein geringes Gewicht, was sich in einem geringem Aufwand für Transport, Lagerung und Montage niederschlägt.

Weitere Ziele, Vorteile, Merkmale und Anwendungsmöglichkeiten der vorliegenden Erfindungen ergeben sich aus der nachfolgenden Beschreibung eines Ausführungsbeispieles anhand der Zeichnungen. Dabei bilden alle beschrieben und/oder bildlich dargestellten Merkmale für sich oder in beliebiger sinnvoller Kombination den Gegenstand der vorliegenden Erfindung, auch unabhängig von ihrer Zusammenfassung in den Patentansprüchen oder deren Rückbeziehung.

Es zeigen:
- Figur 1: eine mögliche Ausführungsform eines erfindungsgemäßen Verbindungselemente mit zwei Seilen, in einer perspektivischen Ansicht,
- Figur 2: eine perspektivische Ansicht des Verbindungselementes gemäß Figur 1, teilweise gebrochen,
- Figur 3: die Ansicht A gemäß Figur 2,
- Figur 4: einen Querschnitt des Verbindungselementes längs der Linie B-B gemäß Figur 3,
- Figur 5: die Ansicht C gemäß Figur 3 und
- Figur 6: eine perspektivische Ansicht einer möglichen Ausführungsform eines erfindungsgemäßen Sicherungselementes.

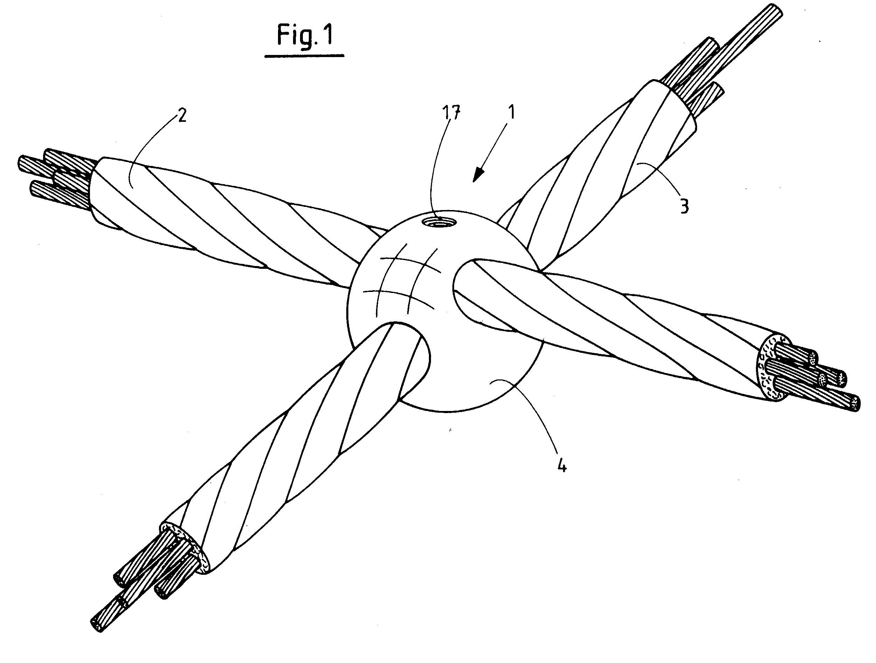

Das Verbindungselement 1 gemäß Figuren 1 bis 5 dient zur Fixierung von zwei Seilen 2, 3, wie bspw. in Kreuzungspunkten von Sicherungs-, Halte- oder Kletternetzen.

Das Verbindungselement 1 weist bei der hier gewählten Ausführungsform einen kugelförmigen Elementkörper 4 auf, welcher von zwei im rechten Winkel zueinander verlaufenden und durch Wandungen 5 voneinander getrennten Durchgangskanälen 6 und 7 für die beiden Seile 2 und 3 durchbrochen ist.

Zur Sicherung der Seile 2, 3 gegen ein axiales Verschieben oder eine Drehbewegung bei Zug- bzw. Druckbeanspruchung der Seile 2, 3 bzw. eines daraus gebildeten Netzes sind Sicherungselemente 8, 9 vorgesehen, welche den jeweiligen Durchgangskanal 6, 7 mit dem entsprechenden Seil 2, 3 in Querrichtung durchsetzen. Die Sicherungselemente 8, 9 sind derart gegeneinander ausgerichtet, daß sie sich mit ihren freien Enden in den jeweils anderen Durchgangskanal 7 bzw. 6 mit zugeordnetem Seil 3 bzw. 2 erstrecken. Dabei verlaufen die beiden Sicherungselemente 8, 9 in entgegengesetzter Richtung. Selbstverständlich ist es auch möglich, daß die Sicherungselemente 8, 9 den jeweils anderen Durchgangskanal 7 bzw. 6 bzw. das zugeordnete Seil 3 bzw. 2 vollständig in Querrichtung durchsetzen und mit ihren Enden in dem Elementkörper 4 gehalten sind.

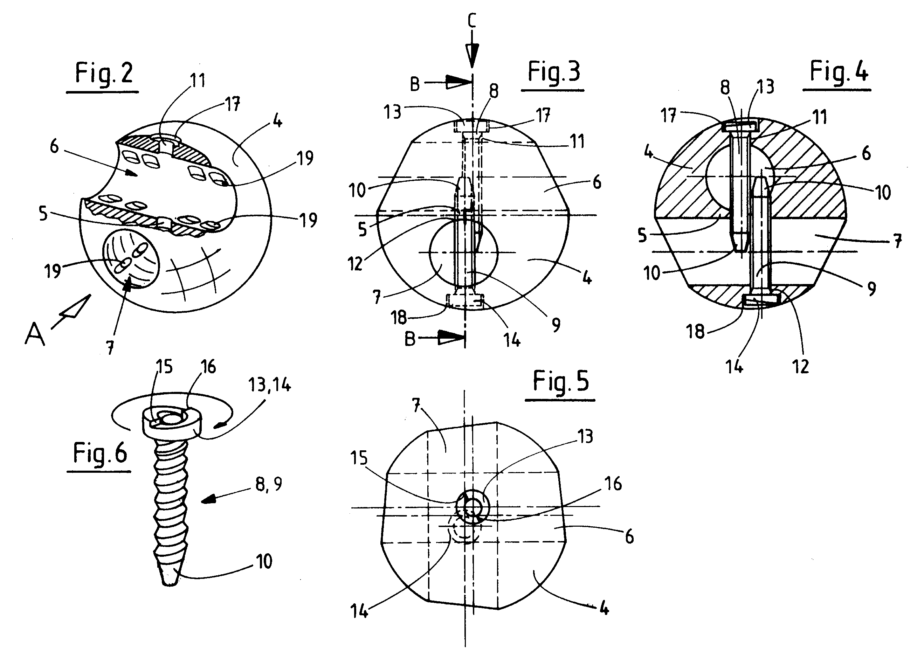

Bei dem hier gewählten Ausführungsbeispiel sind die Sicherungselemente 8 und 9, wie insbesondere aus Figur 6 zu ersehen, in Form von Gewindeschneidschrauben mit Spitze 10 ausgebildet, welche selbsthemmend in zugeordneten Schraubenlöchern 11, 12 des Elementkörpers 4 gehalten sind. Bei Einschrauben der Sicherungselemente 8, 9 legen sich die Litzen der Seile 2, 3 einzelnen zwischen die Gewindegänge an den Sicherungselementen 8, 9, wodurch infolge der Volumenverdrängung ein enormer Anpreßdruck des Seiles gegen die Innenwandung des jeweiligen Durchgangskanals 6, 7 aufgebaut wird. Die Ausbildung der Sicherungselemente mit selbstfurchendem oder selbstschneidendem Gewinde führt aber auch dazu, daß es zu keinen Beschädigungen oder Materialschwächungen an den Seilen 2, 3 kommt, da die Seilitzen seitlich das jeweilige Sicherungselement 8, 9 umschließen und sich dabei zwischen den jeweiligen Gewindegängen beiderseits des Sicherelementes 8,9 anlegen. Dies ist selbst dann der Fall, wenn das Sicherungselement 8, 9 auf die Litze eines Seiles 2, 3 trifft, wobei sich dann die Litzendrähte einzelen und zu mehreren zwischen den Gewindegängen beiderseits des Sicherungselementes 8, 9 anlegen.

Wie weiterhin aus Figur 6 zu ersehen, weisen die Schraubenköpfe 13, 14 der Sicherungselemente 8, 9 Mitnehmerflanken 15, 16 zum Ansetzen eines Klingenwerkzeuges, bspw. eines Schraubenziehers, auf, wobei die Mitnehmerflanken 15, 16 lediglich die Übertragung eines Anziehmomentes entsprechend der in Figur 6 gezeigten Pfeilrichtung ermöglichen. Ein Herausschrauben der Sicherungselemente 8, 9 aus dem Elementkörper 4 durch Unbefugte ist daher ausgeschlossen. Weiterhin besitzt der Elementkörper 4 Senkungen 17, 18 für die Sicherungselemente 8, 9 bzw. für die Gewindeschneidschrauben, so daß das Verbindungselement 1 im Hinblick auf eine Verletzungsgefahr keine vorstehenden Teile aufweist.

Wie in Figur 2 dargestellt, sind an den Durchgangskanälen 6, 7 Widerhaken 19 gebildet. Die Anordnung von Widerhaken 19 empfiehlt sich insbesondere bei der Fixierung von Stahlseilen, wenn besonders hohe Zug- und Druckbeanspruchungen der Seilverbindung, wie bspw. im Falle von Haltenetzen für den Berg- und Tunnelbau, verlangt werden.

Als Material für den Elementkörper 4 kommt, ggf. glasfaserverstärktes, Polyamid (PA), Polypropylen (PP) oder Polyäthylen (PE) und bei besonders hohen Festigkeitsanforderungen kohlefaserverstärktes Polyester oder Polyestergemisch in Betracht. Zusammen mit der einstückigen Ausbildung des Elementkörpers 4 ergibt sich bei Verwendung dieser Werkstoffe eine außerordentliche hohe und dauerhafte Festigkeit des Verbindungselementes 1. Auch im Falle, daß die Verbindungselemente 1 direkter mechanischer Beanspruchungen ausgesetzt sind, treten sich lediglich Verformungen des Elementkörpers 4 auf, ohne daß es zu einem Platzen oder Bersten kommt. Die Verbindungselemente 1 sind daher im besonderen Maße auch für Seilkreuzungen von Netzen geeignet, wie sie insbesondere im Untertage-Einsatz zum Schutz vor Steinfall oder im Straßenbau für Steilhänge zum Schutz vor Steinschlag eingesetzt werden.

### Bezugszeichenliste

- 1 -: Verbindungselement
- 2 -: Seil
- 3 -: Seil
- 4 -: Elementkörper
- 5 -: Wandung
- 6 -: Durchgangskanal
- 7 -: Durchgangskanal
- 8 -: Sicherungselement
- 9 -: Sicherungselement
- 10 -: Spitze
- 11 -: Schraubenloch
- 12 -: Schraubenloch
- 13 -: Schraubenkopf
- 14 -: Schraubenkopf
- 15 -: Mitnehmerflanke
- 16 -: Mitnehmerflanke
- 17 -: Senkung
- 18 -: Senkung
- 19 -: Widerhaken

## Patentansprüche

1. Seilkreuzungs-Verbindungselement, insbesondere für Netze, mit einem, wenigstens zwei Durchgangskanäle (6, 7) für die Seile (2, 3) aufweisenden Elementkörper (4) und wenigstens einer die Seile (2, 3) in den Durchgangskanälen festlegenden, dadurch gekennzeichnet, daß der Gewindeschneidschraube Elementkörper einstückig ausgebildet ist mit einer die Durchgangskanäle (6, 7), zumindest bereichsweise zwischen den Seilen (2, 3) voneinander trennenden Wandung (5), und daß die Seile (2, 3) jeweils mittels mindestens einer Gewindeschneidschraube (8, 9) festgelegt sind, welche quer zur Längsachse der Durchgangskanäle (6, 7) von außen durch das zugeordnete Seil (2, 3) über die Wandung (5) hindurch selbstschneidend eingetrieben sind und sich mit ihren freien Enden in den jeweils anderen Durchgangskanal (7, 6) und das andere Seil (3 bzw. 2) erstrecken.

2. Seilkreuzungs-Verbindungselement nach Anspruch 1, dadurch gekennzeichnet, daß die Sicherungselemente (8, 9) den jeweils anderen Durchgangskanal (7 bzw. 6) bzw. das jeweils andere Seil ebenfalls durchsetzen.

3. Seilkreuzungs-Verbindungselement nach Anspruch 1 oder 2, dadurch gekennzeichnet, daß die Sicherungselemente (8, 9) ein selbstfurchendes Gewinde, wie bspw. ein Holzschraubengewinde, oder ein selbstschneidendes Gewinde aufweisen.

4. Seilkreuzungs-Verbindungselement nach einem der Ansprüche 1 bis 3, dadurch gekennzeichnet, daß die Sicherungselemente (8, 9) am Schraubenkopf (13, 14) Mitnehmerflanken (15, 16) zum Ansetzen eines Klingenwerkzeuges o. dgl. aufweisen, welche lediglich zur Übertragung eines Anziehmomentes ausgebildet sind.

5. Seilkreuzungs-Verbindungselement nach einem der Ansprüche 1 bis 4, dadurch gekennzeichnet, daß der Elementkörper (4) mit Senkungen (17, 18) für die Sicherungselemente (8, 9) versehen ist.

6. Seilkreuzungs-Verbindungselement nach einem der Ansprüche 1 bis 5, dadurch gekennzeichnet, daß der Elementkörper (4) kugelförmig ausgebildet ist.

7. Seilkreuzungs-Verbindungselement nach einem der Ansprüche 1 bis 6, dadurch gekennzeichnet, daß die Durchgangskanäle (6, 7) rechtwicklig zueinander ausgerichtet sind.

8. Seilkreuzungs-Verbindungselement nach einem der Ansprüche 1 bis 7, dadurch gekennzeichnet, daß die Durchgangskanäle (6, 7) mit Widerhaken (19) versehen sind.

9. Seilkreuzungs-Verbindungselement nach einem der Ansprüche 1 bis 8, dadurch gekennzeichnet, daß der Elementkörper (4) aus, ggf. glasfaserverstärktem, Polyamid (PA), Polypropylen (PP) oder Polyäthylen (PE) besteht.

10. Seilkreuzungs-Verbindungselement nach einem der Ansprüche 1 bis 8, dadurch gekennzeichnet, daß der Elementkörper (4) aus, vorzugsweise kohlefaserverstärktem, Polyester oder einem Polyestergemisch besteht.

## Claims

1. Cable crossing connection element, in particular for nets, with an element body (4) displaying at least two passage channels (6, 7) for the cables (2, 3) and at least one thread-cutting screw fixing the cables (2, 3) in the passage channels, characterised thereby, that the element body is constructed in one piece with a wall (5), which separates the passage channels (6, 7) one from the other at least in regions between the cables (2, 3), and that the cables (2, 3) are each fixed by at least one respective thread-cutting screw (8, 9), which screws are driven in from outside transversely to the longitudinal axis of the passage channels (6, 7) to be self-tapping across the wall (5) through the associated cable (2, 3) and extend by their free ends into the respective other passage channel (7, 6) and the other cable (3 or 2).

2. Cable crossing connection element according to claim 1, characterised thereby, that the securing elements (8, 9) likewise penetrate the respective other passage channel (7, 6) and the respective other cable.

3. Cable crossing connection element according to claim 1 or 2, characterised thereby, that the securing elements (8, 9) display a self-furrowing thread, such as for example a wood screw thread, or a self-tapping thread.

4. Cable crossing connection element according to one of the claims 1 to 3, characterised, thereby, that the securing elements (8, 9) display entraining flanks (15, 16), which are formed merely for the transmission of a tightening moment, at the screw head (13, 14) for the application of a bladed tool or the like.

5. Cable crossing connection element according to one of the claims 1 to 4, characterised thereby, that the element body (4) is provided with countersinks (17, 18) for the securing elements (8, 9).

6. Cable crossing connection element according to one of the claims 1 to 5, characterised thereby, that the element body (4) is spherically shaped.

7. Cable crossing connection element according to one of the claims 1 to 6, characterised thereby, that the passage channels (6, 7) are each oriented at a right angle to the other.

8. Cable crossing connection element according to one of the claims 1 to 7, characterised thereby, that the passage channels (6, 7) are provided with barbs (19).

9. Cable crossing connection element according to one of the claims 1 to 8, characterised thereby, that the element body (4) consists of polyamide (PA), polypropylene (PP) or polyethylene (PE), in a given case re-inforced by glass fibres.

10. Cable crossing connection element according to one of the claims 1 to 8, characterised thereby, that the element body (4) consists of polyester or a polyester mixture, preferably re-inforced by carbon fibres.

## Revendications

1. Elément de liaison pour croisement de câbles, en particulier pour des réseaux comportant un corps (4) présentant au moins deux canaux de passage (6, 7) pour les câbles (2, 3) et au moins une vis taraudeuse pour fixer les câbles (2, 3) dans les canaux de passage, caractérisé en ce que le corPs est formé d'une pièce avec une paroi (5) séparant les canaux de passage (6, 7) l'un de l'autre au moins par zones entre les câbles (2, 3) et en ce que les câbles (2, 3) sont fixés respectivement à l'aide d'au moins deux vis taraudeuses respectives (8, 9) qui sont enfoncées de l'extérieur dans le câble concerné (2, 3) à travers la paroi (5) par autotaraudage, transversalement par rapport à l'axe longitudinal des canaux de passage (6, 7), et s'étendent, par leurs extrémités libres dans l'autre canal de passage respectif (7, 6) et l'autre câble (3 ou 2).

2. Elément de liaison pour croisement de câbles selon la revendication 1, caractérisé en ce que les éléments de fixation (8, 9) traversent l'autre canal de passage respectif (7 ou 6) ou l'autre câble respectif.

3. Elément de liaison pour croisement de câbles selon la revendication 1 ou 2, caractérisé en ce que les éléments de fixation (8, 9) présentent un filet à guidage automatique, par exemple, un filet de vis à bois ou un filet autotaraudeur.

4. Elément de liaison pour croisement de câbles selon les revendications 1 à 3, caractérisé en ce que les têtes (13, 14) des éléments de fixation (8, 9) présentent des butées d'entraînement (15, 16) sur lesquelles est appliqué un outil de serrage ou analogue qui sert simplement à transmettre un couple de serrage.

5. Elément de liaison pour croisement de câbles selon l'une quelconque des revendications 1 à 4, caractérisé en ce que le corps (4) est pourvu de dépressions (17, 18) destiné aux éléments de fixation (8, 9).

6. Elément de liaison pour croisement de câbles selon l'une quelconque des revendications 1 à 5, caractérisé en ce que le corps (4) se présente sous une forme sphérique.

7. Elément de liaison pour croisement de câbles selon l'une quelconque des revendications 1 à 6, caractérisé en ce que les canaux de passage (6, 7) font un angle droit l'un par rapport à l'autre.

8. Elément de liaison pour croisement de câbles selon l'une quelconque des revendications 1 à 7, caractérisé en ce que les canaux de passage (6, 7) sont pourvus de saillies (19).

9. Elément de liaison pour croisement de câbles selon l'une quelconque des revendications 1 à 8, caractérisé en ce que le corps (4) est réalisé en polyamide (PA), en polypropylène (PP) ou en polyéthylène (PE) éventuellement renforcé de fibres de verre.

10. Elément de liaison pour croisement de câbles selon l'une quelconque des revendications 1 à 8, caractérisé en ce que le corps (4) est réalisé en polyester de préférence renforcé par des fibres de carbone ou d'un mélange de polyesters.
